(19) Europäisches Patentamt
European Patent Office
Office européen des brevets

(11) EP 3 919 858 A1

(12) EUROPEAN PATENT APPLICATION
published in accordance with Art. 153(4) EPC

(43) Date of publication:
08.12.2021 Bulletin 2021/49

(51) Int Cl.:
G01C 3/00 (2006.01)

(21) Application number: 20748041.9

(22) Date of filing: 22.01.2020

(86) International application number:
PCT/CN2020/073734

(87) International publication number:
WO 2020/156413 (06.08.2020 Gazette 2020/32)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 03.02.2019 CN 201910108750

(71) Applicant: Northwest Instrument Inc.
New Jersey 07801 (US)

(72) Inventors:
• SHI, Xin
  Shanghai 201707 (CN)
• XING, Xing
  Dover, New Jersey 07801 (US)

(74) Representative: Isarpatent
Patent- und Rechtsanwälte Barth
Charles Hassa Peckmann & Partner mbB
Friedrichstrasse 31
80801 München (DE)

(54) **ROTARY LASER DEVICE AND LASER RANGING METHOD**

(57) The present invention relates to a rotating laser apparatus, the rotating laser apparatus comprises a laser emitting module configured to emit first laser light and second laser light, a first angle is formed between the first laser light and the second laser light; a rotating module configured to rotate the first laser light and the second laser light around a first rotation axis to form a first laser surface and a second laser surface that do not overlap with each other; and a base connected to the laser emitting module and the rotating module and configured to support the laser emitting module and the rotating module. The rotating laser apparatus has the ability to emit first laser light and second laser light at a first angle, thereby an additional tilting mechanism such as a leveling device is not required, so as to simplify the structure of the rotating laser apparatus; meanwhile, due to the first angle between the first laser light and the second laser light is pre-configured, there is no angular error to make the measured distance more accurate.

Fig. 1

## Description

## FIELD OF THE DISCLOSURE

The present invention relates to the field of surveying and mapping, and in particular to a rotating laser apparatus and a laser ranging method for performing laser ranging by means of the rotating laser apparatus.

## BACKGROUND

A leveling instrument is an instrument that provides a plane or a straight line reference. The leveling instrument can cooperate with the laser detector to control the level of any measuring point within a certain radius.

Common leveling instruments only have the function of providing a horizontal reference, and do not have the function of distance measurement. Generally, for the distance measurement, distance data is obtained by a special rangefinder, therefore, a receiver is attempted to be disposed on the leveling instrument to receive the emitted laser to determine the distance, but this way needs a complex structure and high cost to achieve, and because of the rotation, the sampling time of the ranging module is very short, resulting in low measurement accuracy.

Hilti mentioned a distance measurement solution in Chinese patent application CN 10829 1809 A, the leveling instrument only emits a laser beam, firstly emits first laser light (this laser light can be oriented horizontally or not), and then the passes the first laser light through a tilting mechanism (such as the leveling device 54 or the tilting device 61 inside the leveling instrument or the height adjusting device 16 located on the tripod) to tilt the emitted laser to form the second laser, and then obtains the tilt angle through the angle sensor, finally, calculates the distance between the leveling instrument and the laser detector based on the difference between the two heights of the two laser beams on the laser detector received and obtained by the laser detector. The disadvantage of this implementation is that the formation of the two adjacent laser beams requires adjustment of the tilt angle each time, thereby increasing the operating frequency of the tilt mechanism and the operating frequency of the angle sensor, and the measurement of each point requires repeated operations, which causes the cumbersome process and errors easily.

Therefore, how to simplify the structure and improve the measurement accuracy is a technical problem to be solved urgently by those skilled in the art.

## SUMMARY

In view of the above technical problem, how to ensure the existing functions of the leveling instrument and make it have the ranging function, and finally achieve the maximum simplification of the structure and operation steps, thereby saving costs, simplifying the measurement operation, and bringing users convenient and user-friendly experience.

In order to solve the above technical problems in the prior art, the first aspect of the present invention proposes a rotating laser apparatus, wherein the rotating laser apparatus comprises:

a laser emitting module configured to emit first laser light and second laser light, wherein a first angle is formed between the first laser light and the second laser light;
a rotating module configured to rotate the first laser light and the second laser light around a first rotation axis to form a first laser surface and a second laser surface that do not overlap with each other; and
a base connected to the laser emitting module and the rotating module and configured to support the laser emitting module and the rotating module.

The rotating laser apparatus has the ability to emit first laser light and second laser light at a first angle, thereby an additional tilting mechanism such as a leveling device is not required, so as to simplify the structure of the rotating laser apparatus; meanwhile, due to the first angle between the first laser light and the second laser light is pre-configured, there is no angular error to make the measured distance more accurate.

In an embodiment according to the present disclosure, the laser emitting module comprises a first laser emitter and a second laser emitter, wherein the first laser emitter is configured to generate the first laser light and the second laser emitter is configured to generate the second laser light.

In this way, two independent laser emitters can be adopted to generate the first laser light and the second laser light, so that the emission angles and wavelength ranges of the first laser light and the second laser light can be controlled separately to configure the first laser light and the second laser light for different application scenarios.

In an embodiment according to the present disclosure, the first laser light and the second laser light have different wavelengths. In this way, an object such as the laser detector receiving the first laser light and the second laser light can distinguish the first laser light from the second laser light by wavelength, so as to provide assistance for subsequent laser ranging.

In an embodiment according to the present disclosure, the first laser light is visible light and the second laser light is invisible light. In this way, an object such as the laser detector receiving the first laser light and the second laser light can distinguish the first laser light from the second laser light by determining whether the laser is visible, so as to provide assistance for subsequent laser ranging.

In an embodiment according to the present disclosure, the laser emitting module comprises a laser emitter and an optical device for adjusting the direction of a laser light generated by the laser emitter, wherein the optical device is configured to generate the first laser light and the second laser light based on adjustment of the laser light generated by the laser emitter. In this way, it is possible to generate two laser beams for laser ranging by only one laser emitter, so that the structure of the rotating laser apparatus can be further simplified and the manufacturing cost thereof can be reduced.

In an embodiment according to the present disclosure, the projections of the first laser light and the second laser light on a plane perpendicular to the first rotation axis form a second angle. Therefore, it is possible to synthesize the above-mentioned first and second angles to determine the angle between the first laser surface and the second laser surface that do not overlap, so as to provide assistance for the subsequent determination of the distance between the laser detector and the rotating laser apparatus.

In an embodiment according to the present disclosure, the vertical projections of the first laser light and the second laser light on a plane perpendicular to the first rotation axis are on a same straight line. In this way, the first laser light and the plane which makes the first laser light perpendicular to the first rotation axis are either in the same direction or differ by 180 degrees, so as to determine the distance between the laser detector and the rotating laser apparatus more accurately.

In an embodiment according to the present disclosure, any of the first laser surface and the second laser surface is perpendicular to the first rotation axis. In this way, it can be ensured that one of the first laser light and the second laser light is perpendicular to the first rotation axis, and the other of the first laser light and the second laser light is not perpendicular to the first rotation axis, that is, presents an angle with the first rotation axis, so that the laser detector can receive the first laser light and the second laser light and determine the position difference data based on positions irradiated on the laser detector by the first laser light and the second laser light to provide assistance for the subsequent determination of the distance between the laser detector and the rotating laser apparatus.

In an embodiment according to the present disclosure, the first laser surface and the second laser surface are symmetrical about a plane perpendicular to the first rotation axis. In this way, it can be ensured that although any of the first laser and the second laser is not perpendicular to the first rotation axis, the first laser surface and the second laser surface formed by the first laser light and the second laser light respectively are symmetrical about a plane perpendicular to the first rotation axis, so that the laser detector can receive the first laser light and the second laser light and determine the position difference data based on the positions irradiated on the laser detector by the first laser light and the second laser light, to provide assistance for the subsequent determination of the distance between the laser detector and the rotating laser apparatus.

In an embodiment according to the present disclosure, the first rotation axis is a vertical rotation axis or a horizontal rotation axis. In this way, the rotating laser apparatus can not only scan the laser horizontally to measure the distance between the laser detector and the rotating laser apparatus, but also scan the laser vertically to measure the distance between the laser detector and the rotating laser apparatus.

In an embodiment according to the present disclosure, the rotating laser apparatus further comprises: A laser detector having a first distance away from the laser emitting module and configured to receive the first laser light and the second laser light and determine position difference data based on positions irradiated on the laser detector by the first laser light and the second laser light. In this way, the first laser light and the second laser light at the first angle can be received, and the position difference data can be determined based on the positions irradiated on the laser detector by the first laser light and the second laser light, thereby providing assistance for the subsequent determination of the distance between the laser detector and the rotating laser apparatus.

In an embodiment according to the present disclosure, the rotating laser apparatus further comprises: A processing module configured to determine a first distance between the laser emitting module and the laser detector based on the position difference data and the first angle.

In this way, the rotating laser apparatus further comprises a processing module capable of processing the acquired data to obtain the first distance between the laser emitting module and the laser detector, which can implement the purpose of the present disclosure in an advantageous manner.

In an embodiment according to the present disclosure, the processing module is configured to be fixedly connected to the base or the laser detector. In this way, it is indicated that the processing module can be installed or disposed at the base, that is, at the body of the rotating laser apparatus, or at the laser detector.

In addition, the second aspect of the present disclosure also provides a laser ranging method, wherein the laser ranging method comprises:

generating first laser light and second laser light using a laser emitting module, wherein a first angle is formed between the first laser light and the second laser light;
rotating the first laser light and the second laser light around a first rotation axis respectively using a rotating module to form a first laser surface and a second laser surface that do not overlap with each other;
receiving the first laser light and the second laser light and determining position difference data based on positions irradiated on the laser detector by the first laser light and the second laser light using a laser detector having a first distance away from the laser emitting module; and

determining a first distance between the laser emitting module and the laser detector based on the position difference data and the first angle using a processing module.

Therefore, the rotating laser apparatus has the ability to emit first laser light and second laser light at a first angle, thereby an additional tilting mechanism such as a leveling device is not required , so as to simplify the structure of the rotating laser apparatus; meanwhile, due to the first angle between the first laser light and the second laser light is pre-configured, there is no angular error to make the measured distance more accurate; furthermore, there is no need to operate the tilt angle of the laser light when a distance measurement is performed every time, thereby simplifying the distance measuring operation, and improving the user experience of using the rotating laser apparatus for distance measurement.

In an embodiment according to the present disclosure, generating the first laser light and the second laser light using the laser emitting module further comprises:

generating the first laser light using a first laser emitter included in the laser emitting module; and generating the second laser light using a second laser emitter included in the laser emitting module.

In this way, two independent laser emitters can be adopted to generate the first laser light and the second laser light, so that the emission angles and wavelength ranges of the first laser light and the second laser light can be controlled separately to configure the first laser light and the second laser light for different application scenarios.

In an embodiment according to the present disclosure, the first laser light and the second laser light have different wavelengths. In this way, an object such as the laser detector receiving the first laser light and the second laser light can distinguish the first laser light from the second laser light by wavelength, so as to provide assistance for subsequent laser ranging.

In an embodiment according to the present disclosure, the first laser light is visible light and the second laser light is invisible light. In this way, an object such as the laser detector receiving the first laser light and the second laser light can distinguish the first laser light from the second laser light by determining whether the laser is visible, so as to provide assistance for subsequent laser ranging.

In an embodiment according to the present disclosure, generating the first laser light and the second laser light using the laser emitting module further comprises:

generating laser light using the laser emitter included in the laser emitting module; and

generating the first laser light and the second laser light based on adjustment of the laser light generated by the laser emitter using the optical device included in the laser emitting module.

In this way, it is possible to generate two laser beams for laser ranging by only one laser emitter, so that the structure of the rotating laser apparatus can be further simplified and the manufacturing cost thereof can be reduced.

In an embodiment according to the present disclosure, any of the first laser surface and the second laser surface is perpendicular to the first rotation axis. In this way, it can be ensured that one of the first laser light and the second laser light is perpendicular to the first rotation axis, and the other of the first laser light and the second laser light is not perpendicular to the first rotation axis, that is, presents an angle with the first rotation axis, so that the laser detector can receive the first laser light and the second laser light and determine the position difference data based on positions irradiated on the laser detector by the first laser light and the second laser light to provide assistance for the subsequent determination of the distance between the laser detector and the rotating laser apparatus.

In an embodiment according to the present disclosure, the first laser surface and the second laser surface are symmetrical about a plane perpendicular to the first rotation axis. In this way, it can be ensured that although any of the first laser and the second laser is not perpendicular to the first rotation axis, the first laser surface and the second laser surface formed by the first laser light and the second laser light respectively are symmetrical about a plane perpendicular to the first rotation axis, so that the laser detector can receive the first laser light and the second laser light and determine the position difference data based on the positions irradiated on the laser detector by the first laser light and the second laser light, to provide assistance for the subsequent determination of the distance between the laser detector and the rotating laser apparatus.

In an embodiment according to the present disclosure, the projections of the first laser light and the second laser light on a plane perpendicular to the first rotation axis are on the same straight line. In this way, the first laser light and the plane which makes the first laser light perpendicular to the first rotation axis are either in the same direction or differ by 180 degrees, so as to determine the distance between the laser detector and the rotating laser apparatus more accurately.

In an embodiment according to the present disclosure, the first rotation axis is a vertical rotation axis or a horizontal rotation axis. In this way, the rotating laser apparatus can not only scan the laser horizontally to measure the distance between the laser detector and the rotating laser apparatus, but also scan the laser vertically to measure the distance between the laser detector and the rotating laser apparatus.

## BRIEF DESCRIPTION OF THE DRAWINGS

The embodiments are shown and clarified with reference to the drawings. These drawings serve to clarify the basic principle, so that only aspects necessary for understanding the basic principle are shown. The drawings are not to scale. In the drawings, the same reference numerals indicate similar features.

FIG. 1 shows a view of a rotating laser apparatus 100 according to the present invention;

FIG. 2 shows a view of an embodiment 210 of the laser emitting module of the rotating laser apparatus 100 according to the present invention;

FIG. 3 shows a view of another embodiment 310 of the laser emitting module of the rotating laser apparatus 100 according to the present invention; and

FIG. 4 shows a flowchart of a laser ranging method 400 for distance measurement by means of the aforementioned rotating laser apparatus.

Other features, characteristics, advantages and benefits of the present invention will become more apparent through the following detailed description in conjunction with the accompanying drawings.

## DETAILED DESCRIPTION

In the following detailed description of the preferred embodiments, reference will be made to the accompanying drawings constituting a part of the present invention. The drawings show specific embodiments capable of implementing the present invention by way of example. The exemplary embodiments are not intended to be exhaustive of all embodiments according to the present invention. It can be understood that other embodiments can be utilized, and structural or logical modifications can also be made without departing from the scope of the present invention. Therefore, the following detailed description is not restrictive, and the scope of the present invention is defined by the appended claims.

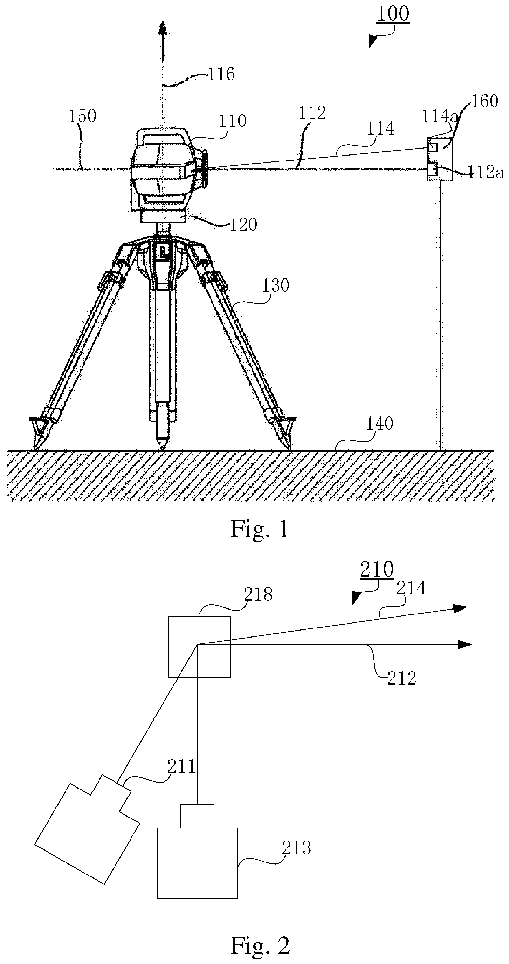

FIG. 1 shows a view of a rotating laser apparatus 100 according to the present invention, it can be seen from the drawing that the rotating laser apparatus 100 can include a laser emitting module 110 configured to emit first laser light 112 and the second laser light 114, wherein the first laser light 112 and the second laser light 114 form a first angle (not marked with angle symbols in the drawing); in addition, the rotating laser apparatus 100 can also include a rotating module 120 configured to rotate the first laser light 112 and the second laser light 114 around the first rotation axis 116 respectively to form a first laser surface and a second laser surface which do not overlap with each other; alternatively, the rotating laser apparatus 100 can further include a base 130 connected to the laser emitting module 110 and the rotating module 120 and configured to support the laser emitting module 110 and the rotating module 120. It can be seen from the drawing that the base 130 can be disposed on the working surface 140, so that the plane 150 formed by a laser beam emitted by the rotating laser apparatus 100 (such as the first laser light 112) is parallel to the working surface 140. Optionally, the rotating laser apparatus 100 can further include a laser detector 160, so that the laser detector 160 can receive the first laser light 112 and the second laser light 114, and sense them at the areas 112a and 114a of its surface respectively.

The figure is merely exemplary and not restrictive, it seems to see from the figure that the first laser light 112 and the second laser light 114 will be irradiated on the laser detector 160 simultaneously, but it is only one of the implementation forms, and the others are of course also feasible, and other implementation forms will be described in the following embodiments.

In addition, although it can be seen from FIG. 1 that the rotating module 120 is located outside the laser emitting module 110, it does not mean that the laser emitting module 110 must be rotated as a whole, so that the first laser light 112 and the second laser light 114 respectively rotate around the first rotating shaft 116 to form a first laser surface and a second laser surface that do not overlap. Those skilled in the art should understand that, for example, the rotating module 120 can only rotate the laser light emitted by the laser emitter without rotating the laser emitter itself to form the first laser surface and the second laser surface that do not overlap.

The rotating laser apparatus has the ability to emit first laser light and second laser light at a first angle thereby an additional tilting mechanism such as a leveling device is not required; meanwhile, due to the first angle between the first laser light and the second laser light is pre-configured, so that there is no angular error to make the measured distance more accurate.

FIG. 2 shows a view of an embodiment 210 of the laser emitting module of the rotating laser apparatus 100 according to the present invention, in this embodiment, the laser emitting module 210 includes a first laser emitter 211 and a second laser emitter 213, wherein the first laser emitter 211 is configured to generate the first laser light 212 and the second laser emitter 213 is configured to generate the second laser light 214. In this way, two independent laser emitters 211 and 213 can be employed to generate the first laser light 212 and the second laser light 214 so as to control the emission angles and wavelength ranges of the first laser light 212 and the second laser light 214 respectively, so that the first laser light and the second laser light can be configured separately for different application scenarios. Preferably, the first laser light 212 and the second laser light 214 have different wavelengths. In this way, an object such as a laser detector that receives the first laser light 212 and the second laser light 214 can distinguish the first laser light 212 from the second laser light 214 by wavelength, so as to provide assistance for the subsequent laser measurement. Further preferably, the first laser light 212 is visible light and the second laser light 214 is invisible light, of course, the first laser light 212 may be set as invisible light and the second laser light 214 may be set as visible light. In this way, an object such as a laser detector that receives the first laser light and the second laser light can distinguish the first laser light from the second laser light by determining whether the laser light is visible, so as to provide assistance for the subsequent laser measurement. Optionally, the laser emitting module 210 can include a laser direction adjustment module 218, which can adjust the emission angles of the first laser light 212 and the second laser light 214 as required.

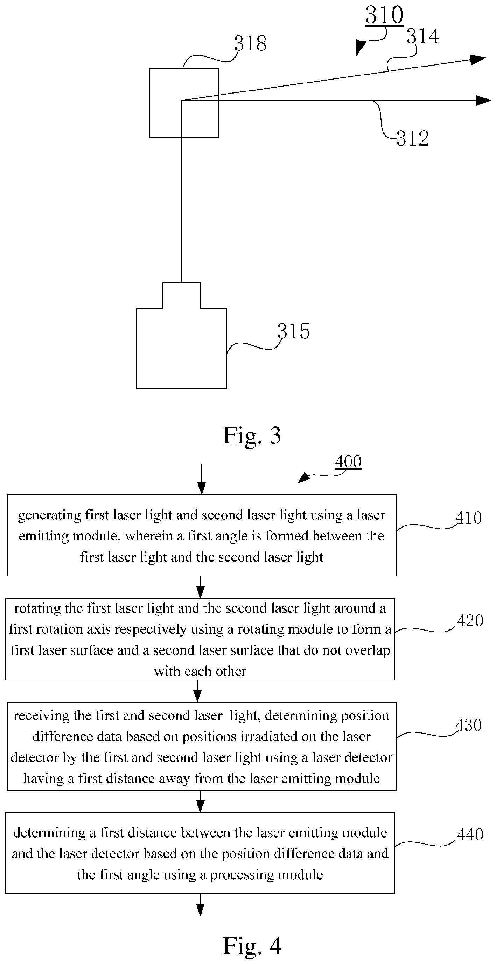

FIG. 3 shows a view of another embodiment 310 of the laser emitting module of the rotating laser apparatus 100 according to the present invention, in this embodiment, the laser emitting module only includes a laser emitter 215, at this time, the first laser 312 and the second laser 314 with different directions are generated by the optical device 318 for adjusting the direction of the laser light generated by the laser emitter 315 included in the laser emitting module, wherein the optical device 318 is configured to generate the first laser light 312 and the second laser light 314 based on adjustment of the laser light generated by the laser emitter. In this way, it is possible to generate two laser beams 312 and 314 for laser ranging by only one laser emitter 315, thereby further simplifying the structure of the rotating laser apparatus 100 and reducing its manufacturing cost.

The laser light generated by the rotating laser apparatus 100 including the laser emitting modules 210 and 310 shown in FIGS. 2 and 3 preferably meets the following requirements, that is, in an embodiment according to the present disclosure, the second angle is formed between the projections performed by the first laser lights 212, 312 and the second laser light 214, 314 on a plane perpendicular to the first rotation axis 116. Therefore, it is possible to synthesize the above-mentioned first and second angles to determine the angle between the first laser surface and the second laser surface that do not overlap, so as to provide assistance for the subsequent determination of the distance between the laser detector and the rotating laser apparatus. In an embodiment according to the present disclosure, the vertical projections of the first laser light 212, 312 and the second laser light 214, 314 on a plane perpendicular to the first rotation axis 116 are on the same straight line. In this way, the first laser light and the plane which makes the first laser light perpendicular to the first rotation axis are either in the same direction or differ by 180 degrees, so as to determine the distance between the laser detector and the rotating laser apparatus more accurately. In an embodiment according to the present disclosure, any one of the first laser surface and the second laser surface is perpendicular to the first rotation axis 116. In this way, it can be ensured that one of the first laser lights 112, 212, 312 and the second laser lights 114, 214, 314 is perpendicular to the first rotation axis 116, and another one of the first laser lights 112, 212, 312 and the second laser lights 114, 214, 314 are not perpendicular to the first rotation axis 116, that is, there is an angle between the first rotation axis 116 and the another beam, so that the laser detector (such as the laser detector 160 in FIG. 1) can receive the first laser lights 112, 212, 312 and the second laser lights 114, 214, 314 and determine the position difference data based on the positions a and b irradiated on the laser detector 160 by the first laser lights 112, 212, 312 and the second laser lights 114, 214 314 separately to provide assistance for the subsequent determination of the distance between the laser detector 160 and the laser emitting module 110 included in the rotating laser apparatus.

At this time, as shown in FIG. 1, it is assumed that the distance between the positions 112a and 114a irradiated on the laser detector 160 by the first laser light 112, 212, 312 and the second laser light 114, 214 314 is h , the angle between the non-overlapped first laser surface and the second laser surface is θ, then it is understood according to the Pythagorean theorem that the distance d between the laser emitting module 110 and the laser detector 160 can be obtained as:

$$d = h/\tan(\theta)$$

In an embodiment according to the present disclosure, the first laser surface and the second laser surface are symmetrical about a plane perpendicular to the first rotation axis. In this way, it can be ensured that although any one of the first laser lights 112, 212, 312 and the second laser lights 114, 214, 314 is not perpendicular to the first rotation axis 116, the first laser surface and the second laser surface formed by the lasers 112, 212, 312 and the second lasers 114, 214, 314 respectively are symmetrical about a plane perpendicular to the first rotation axis 116, so that the laser detector 160 can receive the first laser lights 112, 212, 312 and the second laser lights 114, 214, 314 and determine the position difference data based on the positions 112a and 114a irradiated on the laser detector 160 by the first laser lights 112, 212, 312 and the second laser light 114, 214 314 separately to provide assistance for the subsequent determination of the distance between the laser detector and the laser emitting module included in the rotating laser apparatus. In such an embodiment, it is assumed that the distance between the positions 112a and 114a irradiated on the laser detector 160 by the first laser lights 112, 212, 312 and the second laser light 114, 214 314 is h, and the angle between the non-overlapped first laser surface and the second laser surface is θ, then it is understood according to the Pythagorean theorem that the distance d between the laser emitting module 110 and the laser detector 160 can be obtained as:

$$d=(h/2)/\tan(\theta/2)$$

In an embodiment according to the present disclosure, the first rotation axis is a vertical rotation axis or a horizontal rotation axis. In this way, the rotating laser apparatus can not only scan the laser horizontally to measure the distance between the laser detector and the rotating laser apparatus, but also scan the laser vertically to measure the distance between the laser detector and the rotating laser apparatus.

In an embodiment according to the present disclosure, the rotating laser apparatus further includes:

A laser detector having a first distance away from the laser emitting module and configured to receive the first laser light and the second laser light and determine a position difference data based on positions irradiated on the laser detector by the first laser light and the second laser light. In this way, the first laser light and the second laser light at the first angle can be received, and the position difference data can be determined based on the positions irradiated on the laser detector by the first laser light and the second laser light, thereby providing assistance for the subsequent determination of the distance between the laser detector and the rotating laser apparatus.

In an embodiment according to the present disclosure, the rotating laser apparatus further comprises: A processing module configured to determine a first distance between the laser emitting module and the laser detector based on the position difference data and the first angle.

In this way, the rotating laser apparatus further comprises a processing module capable of processing the acquired data to obtain the first distance between the laser emitting module and the laser detector, which can implement the purpose of the present disclosure in an advantageous manner.

In an embodiment according to the present disclosure, the processing module is configured to be fixedly connected to the base or the laser detector. In this way, it is indicated that the processing module can be installed or disposed at the base, that is, at the body of the rotating laser apparatus, or at the laser detector.

In addition, the second aspect of the present disclosure also provides a laser ranging method, FIG. 4 shows a flow chart of the laser ranging method 400 for distance measurement by means of the aforementioned rotating laser apparatus, it can be seen from the figure that the laser ranging method 400 comprises the following steps:

First, in the method step 410, generating first laser light and second laser light using a laser emitting module, wherein a first angle is formed between the first laser light and the second laser light;

Second, in the method step 420, rotating the first laser light and the second laser light around a first rotation axis respectively using a rotating module to form a first laser surface and a second laser surface that do not overlap with each other;

Next, in the method step 430, receiving the first laser light and the second laser light and determining a position difference data based on positions irradiated on the laser detector by the first laser light and the second laser light using a laser detector having a first distance away from the laser emitting module; and

Finally, in the method step 440, determining a first distance between the laser emitting module and the laser detector based on the position difference data and the first angle using a processing module.

Therefore, the rotating laser apparatus has the ability to emit first laser light and second laser light at a first angle, thereby an additional tilting mechanism such as a leveling device is not required , so as to simplify the structure of the rotating laser apparatus; meanwhile, due to the first angle between the first laser light and the second laser light is pre-configured, there is no angular error to make the measured distance more accurate; furthermore, there is no need to operate the tilt angle of the laser light when a distance measurement is performed every time, thereby simplifying the distance measuring operation, and improving the user experience of using the rotating laser apparatus for distance measurement.

Here, preferably, the detection surface of the laser detector for receiving the first laser light and the second laser light is perpendicular to the first laser light or the second laser light. Therefore, it can be realized that the line segments which are respectively from the starting point of the laser emission of the first laser light to the irradiation point on the laser detector, from the starting point of the laser emission of the second laser light to the irradiation point on the laser detector, and starting point of the laser emission of the first laser light to the starting point of the laser emission of the second laser light form a right triangle, thereby calculating the length of the side formed by one of the first laser light and the second laser light which is perpendicular to the detection surface of the laser detector according to the Pythagorean theorem, i.e., the first distance between the laser emitting module and the laser detector.

In an embodiment according to the present disclosure, generating the first laser light and the second laser light using the laser emitting module further includes:

generating the first laser light using a first laser emitter included in the laser emitting module; and

generating the second laser using a second laser emitter included in the laser emitting module.

In this way, two independent laser emitters can be adopted to generate the first laser light and the second laser light, so that the emission angles and wavelength ranges of the first laser light and the second laser light can be controlled separately to configure the first laser light and the second laser light for different application scenarios.

In an embodiment according to the present disclosure, the first laser light and the second laser light have different wavelengths. In this way, an object such as the laser detector receiving the first laser light and the second laser light can distinguish the first laser light from the second laser light by wavelength, so as to provide assistance for subsequent laser ranging.

In an embodiment according to the present disclosure, the first laser light is visible light and the second laser light is invisible light. In this way, an object such as the laser detector receiving the first laser light and the second laser light can distinguish the first laser light from the second laser light by determining whether the laser is visible, so as to provide assistance for subsequent laser ranging.

In an embodiment according to the present disclosure, generating the first laser light and the second laser light using the laser emitting module further includes:

generating a laser light using the laser emitter included in the laser emitting module; and

generating the first laser light and the second laser light based on adjustment of the laser light generated by the laser emitter using the optical device included in the laser emitting module.

In this way, it is possible to generate two laser beams for laser ranging by only one laser emitter, so that the structure of the rotating laser apparatus can be further simplified and the manufacturing cost thereof can be reduced.

In an embodiment according to the present disclosure, any of the first laser surface and the second laser surface is perpendicular to the first rotation axis. In this way, it can be ensured that one of the first laser light and the second laser light is perpendicular to the first rotation axis, and the other of the first laser light and the second laser light is not perpendicular to the first rotation axis, that is, presents an angle with the first rotation axis, so that the laser detector can receive the first laser light and the second laser light and determine the position difference data based on positions irradiated on the laser detector by the first laser light and the second laser light to provide assistance for the subsequent determination of the distance between the laser detector and the rotating laser apparatus.

In an embodiment according to the present disclosure, the first laser surface and the second laser surface are symmetrical about a plane perpendicular to the first rotation axis. In this way, it can be ensured that although any of the first laser and the second laser is not perpendicular to the first rotation axis, the first laser surface and the second laser surface formed by the first laser light and the second laser light respectively are symmetrical about a plane perpendicular to the first rotation axis, so that the laser detector can receive the first laser light and the second laser light and determine the position difference data based on the positions irradiated on the laser detector by the first laser light and the second laser light, to provide assistance for the subsequent determination of the distance between the laser detector and the rotating laser apparatus.

In an embodiment according to the present disclosure, the projections of the first laser light and the second laser light on a plane perpendicular to the first rotation axis are on the same straight line. In this way, the first laser light and the plane which makes the first laser light perpendicular to the first rotation axis are either in the same direction or differ by 180 degrees, so as to determine the distance between the laser detector and the rotating laser apparatus more accurately.

In an embodiment according to the present disclosure, the first rotation axis is a vertical rotation axis or a horizontal rotation axis. In this way, the rotating laser apparatus can not only scan the laser horizontally to measure the distance between the laser detector and the rotating laser apparatus, but also scan the laser vertically to measure the distance between the laser detector and the rotating laser apparatus.

Based on the laser ranging method disclosed in the present disclosure, several points on the same plane can be measured to form a contour line or a trajectory line, and then the area calculation is further performed, for example, by the method of dividing a square.

Those skilled in the art should understand that the modifications and variations of the various embodiments disclosed above can be made without departing from the essence of the invention. Therefore, the protection scope of the present invention should be defined by the appended claims.

Although different exemplary embodiments of the present invention have been described, it is obvious to those skilled in the art that various changes and modifications can be made, which can achieve some of the advantages of the present invention without departing from the spirit and scope of the present invention. For those who are quite skilled in the art, other components performing the same function can be replaced as appropriate. It should be mentioned that the features explained here with reference to particular figures can be combined with features of other figures, even in those cases where this is not explicitly mentioned. In addition, the method of the present invention can be implemented either in all software implementations using appropriate processor instructions or in a hybrid implementation using a combination of hardware logic and software logic to achieve the same result. Such modifications to the solution according to the invention are intended to be covered by the appended claims.

## Claims

1. A rotating laser apparatus, wherein the rotating laser apparatus comprises:

   a laser emitting module configured to emit a first laser light and a second laser light, wherein a first angle is formed between the first laser light and the second laser light;
   a rotating module configured to rotate the first laser light and the second laser light around a first rotation axis to form a first laser surface and a second laser surface that do not overlap with each other; and
   a base connected to the laser emitting module and the rotating module and configured to support the laser emitting module and the rotating module.

2. The rotating laser apparatus of claim 1, wherein the laser emitting module comprises a first laser emitter and a second laser emitter, wherein the first laser emitter is configured to generate the first laser light and the second laser emitter is configured to generate the second laser light.

3. The rotating laser apparatus of claim 2, wherein the first laser light and the second laser light have different wavelengths.

4. The rotating laser apparatus of claim 1, wherein the first laser light is visible light and the second laser light is invisible light.

5. The rotating laser apparatus of claim 1, wherein the laser emitting module comprises a laser emitter and an optical device for adjusting the direction of a laser light generated by the laser emitter, wherein the optical device is configured to generate the first laser light and the second laser light based on adjustment of the laser light generated by the laser emitter.

6. The rotating laser apparatus of claim 1, wherein the projections of the first laser light and the second laser light on a plane perpendicular to the first rotation axis form a second angle.

7. The rotating laser apparatus of claim 1, wherein the vertical projections of the first laser light and the second laser light on a plane perpendicular to the first rotation axis are on a same straight line.

8. The rotating laser apparatus of claim 1, wherein any of the first laser surface and the second laser surface is perpendicular to the first rotation axis.

9. The rotating laser apparatus of claim 1, wherein the first laser surface and the second laser surface are symmetrical about a plane perpendicular to the first rotation axis.

10. The rotating laser apparatus of any one of claims 1 to 9, wherein the first rotation axis is a vertical rotation axis or a horizontal rotation axis.

11. The rotating laser apparatus of any one of the preceding claims, wherein the rotating laser apparatus further comprises:
   a laser detector having a first distance away from the laser emitting module and configured to receive the first laser light and the second laser light and determine position difference data based on positions irradiated on the laser detector by the first laser light and the second laser light.

12. The rotating laser apparatus of claim 11, wherein the rotating laser apparatus further comprises:
   a processing module configured to determine a first distance between the laser emitting module and the laser detector based on the position difference data and the first angle.

13. The rotating laser apparatus of claim 12, wherein the processing module is configured to be fixedly connected to the base or the laser detector.

14. A laser ranging method, wherein the laser ranging method comprises:

   generating first laser light and second laser light using a laser emitting module, wherein a first angle is formed between the first laser light and the second laser light;
   rotating the first laser light and the second laser light around a first rotation axis respectively using a rotating module to form a first laser surface and a second laser surface that do not overlap with each other;
   receiving the first laser light and the second laser light and determining position difference data based on positions irradiated on the laser detector by the first laser light and the second laser light using a laser detector having a first distance away from the laser emitting module; and
   determining a first distance between the laser emitting module and the laser detector based on the position difference data and the first angle using a processing module.

15. The laser ranging method of claim 14, wherein generating the first laser light and the second laser light using the laser emitting module further comprises:

> generating the first laser light using a first laser emitter included in the laser emitting module; and
> generating the second laser light using a second laser emitter included in the laser emitting module.

16. The laser ranging method of claim 15, wherein the first laser light and the second laser light have different wavelengths.

17. The laser ranging method of claim 14, wherein the first laser light is visible light and the second laser light is invisible light.

18. The laser ranging method of claim 14, wherein generating the first laser light and the second laser light using the laser emitting module further comprises:

> generating laser light using the laser emitter included in the laser emitting module; and
> generating the first laser light and the second laser light based on adjustment of the laser light generated by the laser emitter using the optical device included in the laser emitting module.

19. The laser ranging method of claim 14, wherein any of the first laser surface and the second laser surface is perpendicular to the first rotation axis.

20. The laser ranging method of claim 14, wherein the first laser surface and the second laser surface are symmetrical about a plane perpendicular to the first rotation axis.

21. The laser ranging method of claim 14, wherein the projections of the first laser light and the second laser light on a plane perpendicular to the first rotation axis are on a same straight line.

22. The laser ranging method of claim 14, wherein the first rotation axis is a vertical rotation axis or a horizontal rotation axis.

Fig. 1

Fig. 2

<u>310</u>

318 314

312

315

## Fig. 3

<u>400</u>

| generating first laser light and second laser light using a laser emitting module, wherein a first angle is formed between the first laser light and the second laser light | 410 |

| rotating the first laser light and the second laser light around a first rotation axis respectively using a rotating module to form a first laser surface and a second laser surface that do not overlap with each other | 420 |

| receiving the first and second laser light, determining position difference data based on positions irradiated on the laser detector by the first and second laser light using a laser detector having a first distance away from the laser emitting module | 430 |

| determining a first distance between the laser emitting module and the laser detector based on the position difference data and the first angle using a processing module | 440 |

## Fig. 4

## INTERNATIONAL SEARCH REPORT

| International application No. |
|---|
| **PCT/CN2020/073734** |

**A. CLASSIFICATION OF SUBJECT MATTER**

G01C 3/00(2006.01)i

According to International Patent Classification (IPC) or to both national classification and IPC

**B. FIELDS SEARCHED**

Minimum documentation searched (classification system followed by classification symbols)

G01C

Documentation searched other than minimum documentation to the extent that such documents are included in the fields searched

Electronic data base consulted during the international search (name of data base and, where practicable, search terms used)

CNABS; CNTXT; USTXT; VEN: 旋转激光, 第二, 位置, 夹角, 角度, 固定, 测距, rotat+ laser, positon?, SECOND, angle?, fix+,

**C. DOCUMENTS CONSIDERED TO BE RELEVANT**

| Category* | Citation of document, with indication, where appropriate, of the relevant passages | Relevant to claim No. |
|---|---|---|
| PX | CN 109655034 A (NORTHWEST INSTR INC.) 19 April 2019 (2019-04-19) description, paragraphs 0055-0094 | 1-22 |
| X | CN 102971657 A (RENISHAW PLC) 13 March 2013 (2013-03-13) description, paragraphs 0070-0093, and figures 1-3 | 1-22 |
| A | CN 101010563 A (TRIMBLE NAVIGATION, LTD.) 01 August 2007 (2007-08-01) entire document | 1-22 |
| A | CN 101329165 A (XI'AN JIAOTONG UNIVERSITY) 24 December 2008 (2008-12-24) entire document | 1-22 |
| A | US 2003136901 A1 (FUMIO, O. et al.) 24 July 2003 (2003-07-24) entire document | 1-22 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **19 March 2020** | **01 April 2020** |

| Name and mailing address of the ISA/CN | Authorized officer |
|---|---|
| **China National Intellectual Property Administration (ISA/CN)** <br> **No. 6, Xitucheng Road, Jimenqiao Haidian District, Beijing 100088** <br> **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/073734**

| Patent document cited in search report | | | Publication date (day/month/year) | Patent family member(s) | | | Publication date (day/month/year) |
|---|---|---|---|---|---|---|---|
| CN | 109655034 | A | 19 April 2019 | CN | 209342094 | U | 03 September 2019 |
| CN | 102971657 | A | 13 March 2013 | EP | 2596399 | A1 | 29 May 2013 |
| | | | | CA | 2805701 | A1 | 26 January 2012 |
| | | | | JP | 2013539531 | A | 24 October 2013 |
| | | | | JP | 6033222 | B2 | 30 November 2016 |
| | | | | AU | 2011281377 | A1 | 24 January 2013 |
| | | | | CA | 2805701 | C | 13 February 2018 |
| | | | | CN | 102971657 | B | 22 June 2016 |
| | | | | US | 9671094 | B2 | 06 June 2017 |
| | | | | US | 2013088872 | A1 | 11 April 2013 |
| | | | | WO | 2012010839 | A1 | 26 January 2012 |
| | | | | AU | 2011281377 | B2 | 12 December 2013 |
| | | | | JP | 6262701 | B2 | 17 January 2018 |
| | | | | JP | 2016033517 | A | 10 March 2016 |
| | | | | IN | 201301085 | P1 | 26 September 2014 |
| CN | 101010563 | A | 01 August 2007 | WO | 2006016935 | A1 | 16 February 2006 |
| | | | | EP | 1774257 | B1 | 13 July 2011 |
| | | | | US | 2008158044 | A1 | 03 July 2008 |
| | | | | US | 2006012777 | A1 | 19 January 2006 |
| | | | | EP | 1774257 | A1 | 18 April 2007 |
| CN | 101329165 | A | 24 December 2008 | CN | 100575865 | C | 30 December 2009 |
| US | 2003136901 | A1 | 24 July 2003 | JP | 2003214852 | A | 30 July 2003 |
| | | | | DE | 10301971 | A1 | 11 September 2003 |
| | | | | DE | 10301971 | B4 | 22 July 2004 |
| | | | | JP | 3816807 | B2 | 30 August 2006 |
| | | | | CN | 1434269 | A | 06 August 2003 |
| | | | | US | 7022962 | B2 | 04 April 2006 |
| | | | | CN | 1330929 | C | 08 August 2007 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 108291809 A